Europäisches Patentamt

European Patent Office

Office européen des brevets

(11) Publication number: 0 338 654
A2

# EUROPEAN PATENT APPLICATION

(21) Application number: 89300053.9

(22) Date of filing: 05.01.89

(51) Int. Cl.4: H04M 11/06

(30) Priority: 19.04.88 US 183065

(43) Date of publication of application:
25.10.89 Bulletin 89/43

(84) Designated Contracting States:
DE FR GB

(71) Applicant: CONTROL DATA CORPORATION
8100-34th Avenue South
Minneapolis Minnesota 55440(US)

(72) Inventor: Damoci, Joseph Andrew
11238 Cherry Hill Road
Beltsville Maryland 20705(US)
Inventor: Kern, Matthew Ford
22 Carters Rock Court
Catonsville Maryland(US)
Inventor: Welsh, Russell James
76 Ferris Road
Toronto Ontario(CA)
Inventor: Fourdraine, John Dignus
4 Donora Drive
Toronto Ontario(CA)

(74) Representative: Caro, William Egerton et al
J. MILLER & CO. Lincoln House 296-302 High
Holborn
London WC1V 7JH(GB)

(54) Method and apparatus for controlling communication by a modem over a telephone line.

(57) A method and apparatus are provided for use in an automatic tele-communication system for controlling communication by a modem over a telephone line. Means (R13, D6, U2, R25, 11; D101, D102, D103, U106, R101, 11) are provided for determining prior to initiating communication by the modem over the telephone line whether a telephone connected to the telephone line is off hook and for inhibiting communication by the modem over the telephone line if a telephone is off hook. These same means or further means (11, R59, C32, R51, R55, C29, R54, R52, U11) are arranged for determining during communication by the modem over the telephone line whether a telephone connected to the telephone line goes off hook and for terminating such communication if a telephone goes off hook so as to release the telephone line for use by the telephone.

Fig.1.

# METHOD AND APPARATUS FOR CONTROLLING COMMUNICATION BY A MODEM OVER A TELEPHONE LINE

This invention concerns a method and apparatus for use in an automatic tele-communication system for controlling communication by a modem over a telephone line.

There are a large number of applications in which it is desirable to install automatic data collection and reporting devices in a remote unattended site. These devices typically report to a central computer using some form of tele-communications modem. It is generally more desirable for the modem to interface with a switched network telephone line rather than a permanently dedicated leased telephone line. Whenever possible, it is economically preferable to use an existing voice telephone line rather than install a special telephone line for the sole use of this equipment.

However, sharing a telephone line between normal subscriber usage and automatic machine usage can create some special problems. In particular, the presence of the automatic device may affect normal usage of the telephone line for voice communication.

It is an object of the present invention to provide a method and apparatus for controlling communication by a modem over a telephone line, which is capable of sensing when a telephone goes off hook to relinquish use of the telephone line by the modem.

According to one aspect of the invention, there is provided apparatus for use in an automatic tele-communication system for controlling communication by a modem over a telephone line, the apparatus being characterised by means for determining whether a telephone connected to the telephone line is or goes off hook and for inhibiting or terminating communication by the modem over the telephone line if it is determined that a telephone is or goes off hook so as to allow use of the telephone line by the telephone.

According to another aspect of the invention, there is provided a method of controlling communication by a modem over a telephone line in an automatic telecommunication system, characterised by the steps of determining prior to initiating communication by the modem over the telephone line whether a telephone is off hook and inhibiting communication by the modem over the telephone line if a telephone is off hook, and determining during communication by the modem over the telephone line whether a telephone goes off hook and terminating communication by the modem over the telephone line if a telephone goes off hook so as to release the telephone line for use by the telephone.

The present invention, at least in its preferred form, is concerned with the provision of some means of determining when a telephone line is being or about to be used for normal voice communication in order to ensure that a modem firstly does not attempt to use the telephone line if the line is already in use, and secondly abandons the line if a local telephone hand set goes off hook.

As there is a serious liability involved in a modem using the subscriber telephone line, for example, it is very important that the modem does not prevent normal usage of the telephone in an emergency situation.

Determining when there is no initial loading of the telephone line may be achieved by making a DC voltage measurement between ring and tip terminals of the telephone line. However, one problem is that the characteristics of the telephone line itself can change greatly, both from site to site and at a single site over a period of time. Moreover, the ability to detect when a local hand set goes off hook is a far more difficult determination to make since there is a great variation in the line loading created by different types of telephones.

Accordingly, the invention provides means for sensing the change in telephone line loading which occurs when a telephone hand set goes off hook, and for utilising the sensed change in loading to cause the telephone line to be freed for the telephone.

The present invention will be described further, by way of example, with reference to the accompanying drawings, in which:-

Figure 1 is a circuit diagram of one embodiment of the invention, which utilises a specially generated test signal to sense changes in telephone line loading corresponding to a telephone hand set going off hook;

Figure 2 is a circuit diagram of another embodiment of the invention, which utilises the transmitted data signal of an automatic telecommunication device to sense changes in telephone line loading corresponding to a telephone hand set going off hook; and

Figure 3 is a circuit diagram of still another embodiment of the invention for sensing reduction of telephone line loading corresponding to a telephone hand set going off hook.

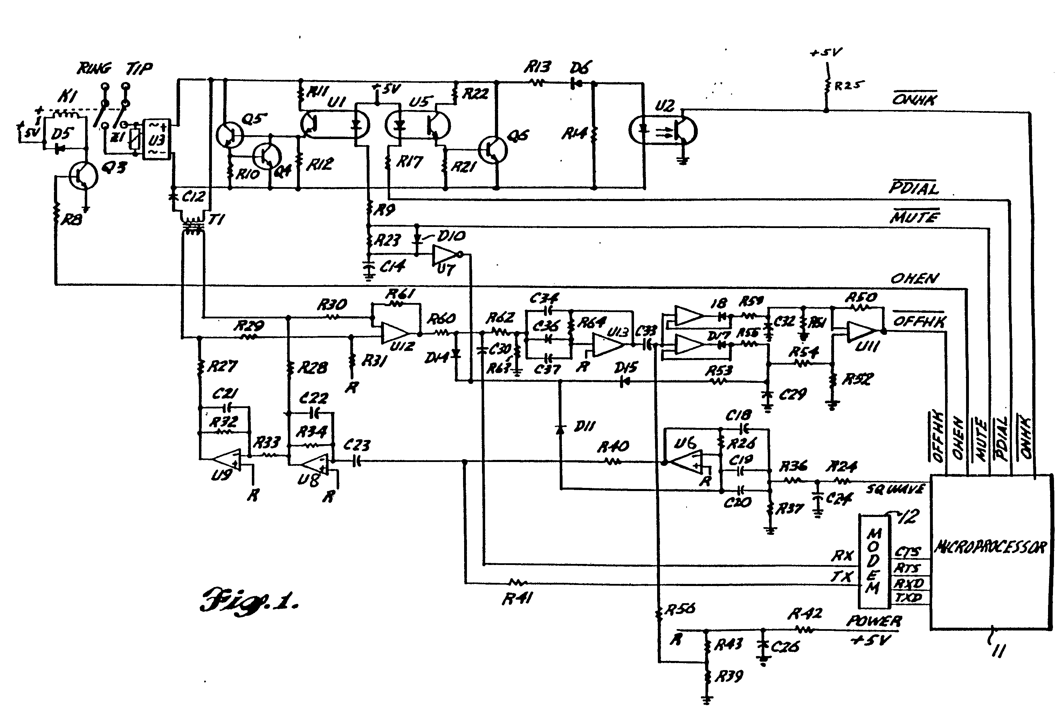

The circuit shown in Figure 1 comprises a microprocessor 11 which controls a modem 12. The modem 12 in accordance with this embodiment of the invention is a Bell 202 half duplex modem. The micro-processor 11 and modem 12 are inter-connected by the various signal lines shown in Figure 1.

First of all, before the micro-processor 11 allows the modem 12 to go off hook, it determines whether a hand set of the telephone system is already off hook. This is done by the micro-processor 11 providing an actuation signal on the signal line OHEN to close a relay K1. Closing the relay K1 causes the voltage between ring and tip terminals of the telephone line to be applied to circuitry comprising a resistor R13, a diode D6 and a light emitting diode photo-transistor U2. If the line voltage on the telephone line is 30 volts or higher, this circuitry will conduct sufficiently to pull a data line ONHK low through a resistor R25 and the photo-transistor of U2. This indicates that there is no load across the telephone line and drawing significant DC current, such as an off hook telephone.

If the micro-processor 11 detects no off hook telephone, then in accordance with its program, the micro-processor determines that it is satisfactory for the modem 12 to go off hook. This is accomplished by the micro-processor 11 continuing to supply the actuation signal on the signal line OHEN and supplying a further such signal on the signal line MUTE. The actuation signal on the line OHEN holds the relay K1 closed. The actuation signal on the line MUTE turns on a transistor Q5, which establishes a DC loop current. The transistor Q5, together with a transistor Q6 and a resistor R10, forms a constant current sink arranged in accordance with this embodiment to set a current of approximately 28 milli-amps. This circuitry is switched on by the MUTE signal via a light emitting diode photo-transistor U1 and resistors R11, R12 and R9. The constant current sink generates a high resulting shunt impedance, set mainly by the value of the resistor R11. This allows audio driving and termination elsewhere, in the embodiment of Figure 1, via a small coupling transformer T1.

After determining that no telephone hand sets are initially off hook, the important determination becomes that of sensing if and when a telephone hand set goes off hook. In accordance with this embodiment of the invention, detection of a telephone hand set going off hook is provided by detecting a reduction in the amplitude of a transmitted test signal. The test signal in accordance with this embodiment is a 300 Hz square wave, shown for simplicity and convenience in Figure 1 as being derived from or generated by the micro-processor 11. This 300 Hz test signal is shaped by resistors R24, R36, R37, R26, capacitors C24, C18, C19, C20 and an amplifier U6, to provide a low distortion 300 Hz sine wave. Low distortion is desirable so that the sine wave does not affect operation of the modem 12, such as operation of the carrier detect function of the modem. The 300 Hz sine wave is mixed with the transmitted data signal TX from the modem 12. The mixing is performed at resistors R40 and R41, with the values of these resistors being chosen such that the outgoing transmitted data signal TX is at -10dBM signal level. This mixed signal is transmitted on the telephone line through the coupling transformer T1 by a push pull circuit comprising amplifiers U8 and U9 and related discrete components shown in Figure 1.

The outgoing signal at transformer T1 is sampled by circuitry comprising an amplifier U12 and resistors R29, R30, R31 and R61, which buffers this signal for a tuned amplifier circuit comprising an amplifier U13, resistors R62 to R64, and capacitors C34, C36 and C37. This amplifier circuit is tuned for 300 Hz, and rejects the modem signal band (frequencies higher than 100 Hz) while providing gain for the 300 Hz test signal. It is this separation of the 300 Hz test signal which allows continuous off hook detection.

The filtered 300 Hz test signal is passed via diodes D17 and D18 to two similar peak detecting integrators. One integrator, comprising a resistor R59, a capacitor C32 and a resistor R51, has a time constant of approximately 0.5 seconds. The other integrator, comprising a resistor R55, a capacitor C29, a resistor R54 and a resistor R52, has a time constant of approximately 10 seconds. The short term average of the 300 Hz test signal on the telephone line is compared with the long term average by a comparator U11 to detect changes in line loading. More specifically, it has been established that a telephone going off hook across the line causes a reduction in the 300 Hz test signal of greater than 2 dB. This step change is detected by the comparator U11 when the faster integrator settles to the lower amplitude, resulting in a line OFFHK going to an active state.

The long time constant integrator provides a self adjusting reference level, which makes it unnecessary to have set up or trim controls. The typical variations in telephone lines from site to site or at one site over time are compensated for by the long time constant integrator. The resistors R54 and R52 form a divider, which ensures that the idle level generated by the long time constant integrator is always less than that of the other integrator. The resistor R55 and a resistor R53, a diode D15 and an amplifier U7 raise the signal on the MUTE line to set an idle level for the long time constant integrator which is guaranteed lower than the idle level of the other integrator under all start up and transient conditions. The resistors R59 and R55 reduce intgegrated charging due to telephone line transients and normalise the driving source. A resistor R50 generates hysteresis in the output of the comparator U11 to ensure clean switching. The ratio of the values of the resistors R54 and R52 sets the detection sensitivity, together with the ratio of the values of resistors R50 and R59 which sets the degree of hysteresis. Resistors R43 and R39 form a 0.83 volt bias source which ensures that both integrators are constant partly charged to reduce acquisition time as well as to set a lower limit to integrator discharge and to ensure predictable start up and idle conditions. Variations in the modem signal level or moderate noise on the telephone line will not affect the off hook detector.

The signal on the line OFFHK can be sampled by the micro-processor 11 to detect the off hook condition of a telephone hand set. Upon detection of the line OFFHK going active, the micro-processor will cause the modem 12 to vacate the telephone line by disabling the OHEN and MUTE signal lines. The circuit described in connection with Figure 1 uses a 300 Hz test signal as a means of determining when a telephone hand set goes off hook, such a 300 Hz test signal being generally outside the band width for all unconditioned telephone line type modems. This type of arrangement is particularly well suited for half duplex modems, although it works equally well for full duplex modems.

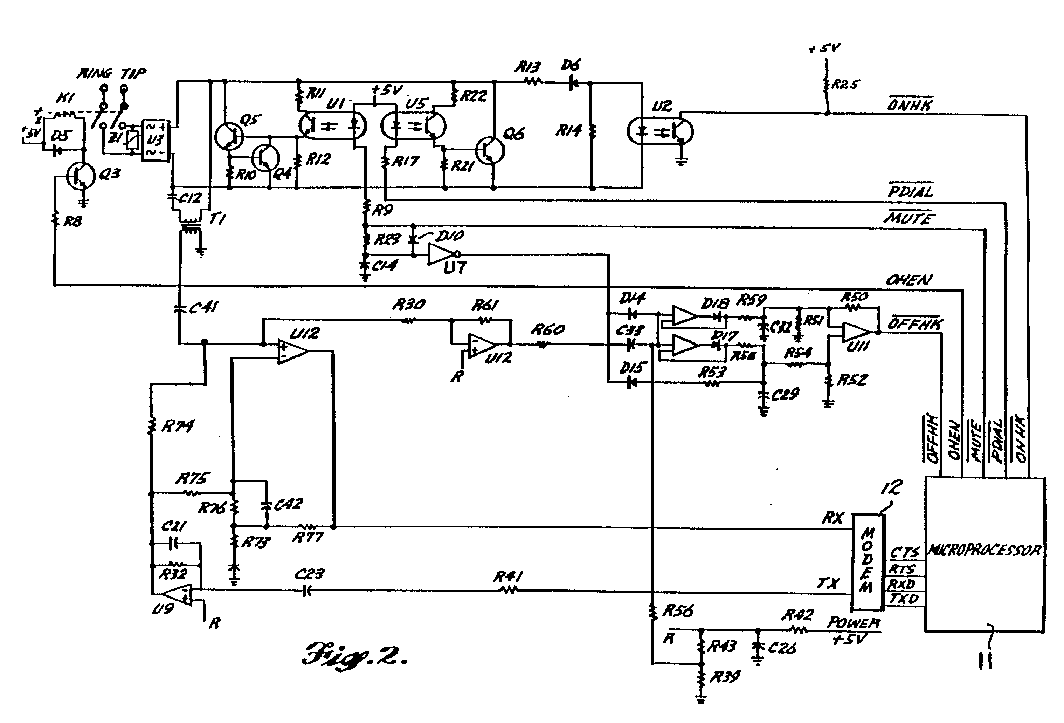

In accordance with another embodiment of the invention, and for the case of full duplex modems, a simplification can be made in that the 300 Hz test signal is not needed. In a full duplex modem, such as a Bell 212 type, the transmitted data signal can itself be utilised for detecting an off hook condition. The circuit for this is illustrated in Figure 2, in which the same reference numerals have been used as in Figure 1 to refer to like components and circuitry arrangements. In the circuit of Figure 2 the tuned amplifier circuit of Figure 1 for separating the test signal from the data signal has been eliminated, together with the other circuitry for specifically dealing with the 300 Hz test signal. In the circuit of Figure 2, the outgoing data signal TX from the modem 12 is amplified by the driver circuit comprising the amplifier U9 and related discrete components connected to the coupling transformer T1. The outgoing signal TX is sampled by the circuitry comprising the amplifier U12 and related components shown in Figure 2 and passed via diodes D17 and D18 to the two peak detecting integrators. The integrator comprising the resistor R59, the capacitor C32 and the resistor R51 has a time constant of approximately 0.5 seconds, as was the case in the arrangement of Figure 1. Similarly, the other integrator comprising the resistor R55, the capacitor C29, the resistor R54 and the resistor R52 has a time constant of approximately 10 seconds. Like the arrangement of Figure 1, the arrangement of Figure 2 functions such that it is self adjusting for variations in telephone lines, so that it is not necessary to have any trim controls or set up controls. Any step change in the outgoing data signal, as would result when a telephone hand set goes off hook, is detected by the comparator U11 when the faster integrator settles to the lower amplitude, resulting in the OFFHK line connected to the microprocessor 11 going to the active state. Upon detection of the line OFFHK going active, the micro-processor 11 causes the modem 12 to vacate the telephone line by disabling the lines OHEN and MUTE.

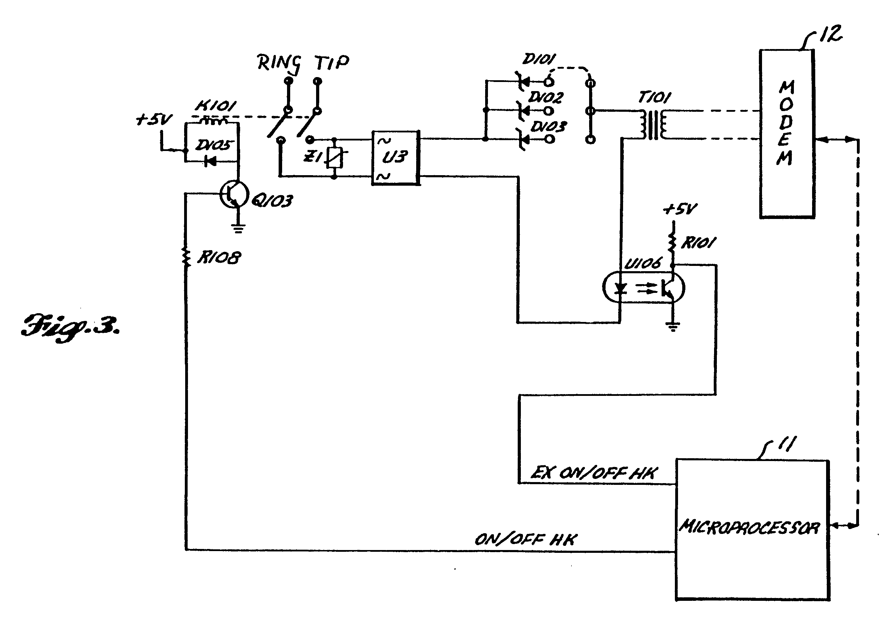

Turning now to a consideration of Figure 3, there is shown an even more simplified arrangement for an off hook detector in accordance with still another embodiment of the invention. In Figure 3, the coupling circuitry inter-connecting the modem 12 and the microprocessor 11 is, for simplicity, not shown, nor is the circuitry coupling the output of the modem 12 to the coupling transformer T101, which is shown in Figure 3. Suitable circuitry for such coupling arrangements has been shown in connection with Figures 1 and 2 and is, moreover, known to those skilled in the art.

In normal operation of a telephone line, when a telephone hand set goes off hook, the voltage on the telephone line, which is approximately 48 volts, drops typically to around 7 to 10 volts. The word typically is used inasmuch as telephone lines vary in characteristics in accordance with their distance from a telephone company central office and the amount of loading a particular brand or model of telephone applies when it is taken off hook. Telephone line impedances can vary from 440 to 3600 Ohms. In accordance with the embodiment of the invention illustrated in Figure 3, a Zener diode D101 is provided, which will maintain the line voltage across the tip and ring terminals at approximately 17 volts DC. A current loop is established from the tip terminal through the Zener diode D101, the transformer T101, and a light emitting diode photo-transistor U106, to the ring terminal once the relay K101 has been closed via an ON/OFF HK control line through a resistor R108 and a transistor Q101, by the micro-processor 11 to enable the modem 12 to go off hook. The output from the photo-transistor of U106, taken at a resistor R101, is supplied to the microprocessor 11 on a line EX ON/OFF HK. When the Zener diode D101 is conducting, which corresponds to the situation when no telephone hand set is off hook, the above described current loop is established and the output from the photo-transistor of U106 signals the micro-processor that no telephone hand set is off hook. However, if a telephone hand set goes off hook, then the telephone line voltage is insufficient for the Zener diode D101 to conduct, and no current loop is established. This information is supplied to the microprocessor 11 via the EX ON/OFF HK signal line, and the micro-processor 11 acts on the information either to inhibit the modem from going off hook, or to have it go back on hook if it was already off hook.

In Figure 3, the Zener diode D101 is shown as being connected by a jumper (dotted lines) with the transformer T101. In this instance, the Zener diode D101 is a 1N5353A diode that sets a voltage of approximately 17 volts. The other Zener diodes D102 and D103 shown in Figure 3 are lower voltage Zener diodes which can be selected for use in cases where the location including the micro-processor 11 and modem 12 is extremely far from a central office and the voltage on the telephone line is low to begin with. In that instance, the jumper indicated by the dotted lines in Figure 3 is simply connected across the appropriate one of the diodes.

## Claims

1. Apparatus for use in an automatic telecommunication system for controlling communication by a modem over a telephone line, the apparatus being characterised by means (R13, D6, U2, R25, 11, R59, C32, R51, R55, C29, R52, R54, U11; D101, D102, D103, U106, R101, 11) for determining whether a telephone connected to the telephone line is or goes off hook and for inhibiting or terminating communication by the modem over the telephone line if it is determined that a telephone is or goes off hook so as to allow use of the telephone line by the telephone.

2. Apparatus as claimed in claim 1, characterised in that the determining means comprise means (D101, D102, D103) for deriving a standard voltage signal from a voltage on the telephone line, and means (U106) responsive to disappearance of the standard voltage signal for providing an indication that a telephone has gone off hook.

3. Apparatus as claimed in claim 2, characterised in that the means for deriving the standard voltage signal comprise a Zener diode (D101) selected to have a voltage rating in comparison with the voltage on the telephone line such that, when a telephone goes off hook, the Zener diode no longer conducts.

4. Apparatus as claimed in claim 2 or 3, characterised in that the means for deriving the standard voltage signal comprise a plurality of Zener diodes (D101, D102, D103), each having a different voltage rating and being arranged to be selectively employed for deriving the standard voltage signal in dependance upon the normal voltage on the particular telephone line.

5. Apparatus according to claim 1, characterised in that the determining means comprise first and second integrators (R59, C32, R51, R55, C29, R52, R54) having respectively relatively short and long integration time constants and being arranged to integrate a signal which is transmitted on the telephone line during communication by the modem over the telephone line, and comparison means (U11) for comparing the integrated signal outputs of the first and second integrators in order to detect a substantial difference between the integrated signal outputs indicative of an additional load being applied to the telephone line corresponding to a telephone going off hook.

6. Apparatus as claimed in claim 5, characterised by means (11, R24, R36, R37, R26, C24, C18, C19, C20, U6, R40, R41, U8, U9, C21 to C23, R32 to R34, R27, R28) for generating a test signal and for supplying the test signal to the telephone line during communication by the modem over the telephone line, the first and second integrators being arranged to integrate the test signal.

7. Apparatus as claimed in claim 5, characterised in that the first and second integrators are arranged to integrate the data signal transmitted by the modem.

8. A method of controlling communication by a modem over a telephone line in an automatic telecommunication system, characterised by the steps of determining prior to initiating communication by the modem over the telephone line whether a telephone is off hook and inhibiting communication by the modem over the telephone line if a telephone is off hook, and determining during communication by the modem over the telephone line whether a telephone goes off hook and terminating communication by the modem over the telephone line if a telephone goes off hook so as to release the telephone line for use by the telephone.

9. A method as claimed in claim 8, characterised in that the step of determining during communication by the modem over the telephone line comprises the steps of deriving a standard voltage signal from a voltage on the telephone line, and responding to a substantial change in or disappearance of said standard voltage signal to provide an indication that a telephone has gone off hook.

10. A method as claimed in claim 8, characterised in that the step of determining during communication by the modem over the telephone line comprises the steps of integrating a signal supplied to the telephone line during communication by the modem over the telephone line in first and second integrators (R59, C32, R51, R55, C29, R52, R54) having respectively relatively short and long integration time constants, and comparing the outputs of the first and second integrators to detect a substantial difference between the outputs indicative of an additional load being applied to the telephone line corresponding to a telephone going off hook.

11. A method as claimed in claim 10, characterised by the step of generating a test signal for supply to the telephone line during communication by the modem over the telephone line and for integration by the first and second integrators.

12. A method as claimed in claim 10, characterised in that the data signal transmitted by the modem during communication by the modem over the telephone line is the signal integrated by the first and second integrators.

Fig.1.

Fig.2.

EP 0 338 654 A2

Fig.3.

EP 0 338 654 A2